# EUROPEAN PATENT SPECIFICATION

(11) **EP 3 293 061 B1**
(45) Date of publication and mention of the grant of the patent: **26.12.2018**
(21) Application number: 16206992.6
(22) Date of filing: 27.12.2016
(51) Int. Cl.: B60S 1/52

(54) **ADJUSTABLE FLUIDIC NOZZLE OF THE WASHING SYSTEM ON VEHICLES**
EINSTELLBARE FLUIDISCHE DÜSE DES WASCHSYSTEMS AN FAHRZEUGEN
BUSE FLUIDIQUE RÉGLABLE DU SYSTÈME DE LAVAGE DE VÉHICULES

(30) Priority: 08.09.2016 SI 201600225
(43) Date of publication of application: 14.03.2018
(73) Proprietor: S.E.P. d.o.o., 8230 Mokronog (SI)
(72) Inventor: PAL, Edmund, 8232 Sentrupert (SI); KASTELEC, Luka, 8322 Stopice (SI)
(74) Representative: Grünecker Patent- und Rechtsanwälte PartG mbB

(56) References cited:
- WO-A1-02/060589
- WO-A1-2005/021341
- US-A1- 2010 224 707

## Description

### The subject of the invention

The subject of the invention is an adjustable fluidic nozzle of the washing system on vehicles, which is intended to be installed in the land, water and/or air vehicles for cleaning windshield glass, side and rear windows, glass roofs, windows, headlight lenses, camera lenses and other glass-washable surfaces on vehicles. It consists of at least one, two, three or more two-part cylindrical fluidic inserts with internal flow channels in both half cylinders, which are built into the nozzle body casing so that they are rotatably movable, which makes it possible to adjust the inclination angle of the outlet opening for discharging the washing fluid.

### Technical problem

The technical problem solved by this invention is such a construction of an adjustable fluidic nozzle of the washing system on vehicles that will enable installation of one, two or more rotatably movable cylindrical fluidic inserts within the same fluidic nozzle body, which can be inserted in any cylindrical cavity. In the fluidic nozzle body, cylindrical inserts within cylindrical cavities will be positioned to each other in such a way to enable washing-fluid jets to cover the desired part of the washable surface on vehicles, primarily when it comes to larger washable surfaces. Consequently, a smaller number of fluidic nozzles will have to be built in for washing larger washable surfaces of vehicles.

Furthermore, another problem resolved by this invention is how to carry out the flow channels with such an inlet and outlet opening within both half cylinders of the cylindrical fluidic insert that, with the characteristic form of these openings, will enable creating an optimal fluidic effect of the washing fluid on its way through the cylindrical fluidic insert and when exiting it, whereby it will be possible to adjust the washing-fluid jet in the vertical line depending on the position and size of the surface on the vehicle to be washed.

Furthermore, another problem resolved by the invention is the problem of correct and precise assembly of both half cylinders into the cylindrical fluidic insert according to the invention, which will ensure that the identical flow channels of both half cylinders will be positioned congruently one against the other.

The construction of the fluidic nozzle according to the invention will make it possible to install a larger number of cylindrical fluidic inserts, whereby its casing, body and attachment for the washing-fluid connection are still compact, whereas the manufacture, assembly and the insertion of the cylindrical fluidic inserts are simple.

### Current state of the art

Several constructions of nozzles for washing certain glass surfaces on vehicles are known. They are of classical execution with a fixed washing-fluid jet, of fluidic execution, etc.

A nozzle with an adjustable cylindrical insert according to the patent document WO 2005/021341, which discloses the preamble of claim 1, is known; it consists of two half cylinders, which are indivisibly connected with each other with a bending film hinge. The fluidic structure and flow channels, respectively are constructed into the internal surface of one half cylinder. The weakness and deficiency of this known nozzle is in the fact that it is not carried out so as to enable the installation of two, three or more cylindrical inserts within the nozzle body as in such a case, the level of washing-fluid jets would be misaligned as the fluidic structure is made only in the internal surface of the lower half cylinder and, consequently, the outlet opening is located under the dividing surface of the cylindrical insert. In such an execution, the washing-fluid jet from the nozzle is not directed straight in view of the cylinder axis and, as a result, the jet is shifted in relation to the nozzle. Further weakness of this nozzle is that after assembling both half cylinders, the bending film hinge protrudes slightly outwards causing heavier assembly and installation of the cylindrical insert into the nozzle body. This can cause damage to the bending film hinge and, consequently, leaking of washing fluid out of the nozzle. In case the bending film hinge would be removed, the insert becomes unstable, which would make it more difficult to insert it into the nozzle. Another weakness is, when installing the cylindrical insert into the nozzle body, a special attention must be paid to make sure that the insert is inserted into it in such a way that the half cylinder with the fluidic structure is always installed below.

According to the document WO 2011/033223, a 3-jet nozzle is known, which simultaneously releases three jets of the washing fluid from the adjustable cylinder. To the 3-jet nozzle, an addition with a fluidic insert is added enabling the fluidic outlet of the washing fluid; in this way it replaces a 3-jet nozzle. Consequently, the washing-fluid nozzle can have a 3-jet or a fluidic effect. The hollow cylindrical insert with three outlet openings is of unipartite construction and it is placed in the nozzle body so that it is rotatably movable. The weakness and deficiency of this nozzle is in the fact that an extra addition to the basic 3-jet nozzle is required for the fluidic function. Furthermore, its weakness and deficiency is in the fact that it does not enable installation of two, three or more adjustable cylinders within the nozzle body. When it come to the fluidic function, the weakness and deficiency of this nozzle is also in the fact that the fluidic insert protrudes out of the nozzle and can be damaged easily, it can also be shifted from its position required for the ideal direction of the washing-fluid jet to the washable surface. Due to the external additional fluidic insert the nozzle is rather large, and owing to this, there is the possibility that the centre of the outlet of the washing-fluid jet becomes slightly shifted in view of the centre of the nozzle, because of which the washing-fluid jet is shifted as well. Furthermore, the weakness and deficiency of this solution is also in the fact that the nozzle protruding out of the slot, which keeps it inside the positioning area, can get displaced. It is complicated to produce and to assemble it, particularly, in order to achieve tight sealing between the cylinder and the body. Also, it is known that nozzles with several jets use larger quantities of the washing fluid to achieve the same washing effect as the nozzles with one jet.

Furthermore, according to the document EP 1 629 896, the oscillating washer nozzle device with an adjustable spherical carrier with an inserted two-part fluidic insert is known. In relation to the execution with the spherical carrier, problems can occur when adjusting the direction of the washing-fluid jet due to a small sealing edge that it ensures. Consequently, the sealing of the spherical nozzle within the opening in the body can be less tight and the washing fluid can leak. The weakness and deficiency of this device is also in the fact that the spherical nozzle consists of three components because of which it is complicated and expensive to produce and assemble it in order to ensure good sealing properties. Furthermore its weakness and deficiency is in the fact that, in relation to it, it is more difficult to ensure the clamping zone of the spherical nozzle as it can move in all directions within the opening in the nozzle body.

According to the document DE 196 52 083, the washing nozzle is firmly fixed to the nozzle holder, which is clamped to the vehicle bodyshell slightly away from the adjustable lock. When the lock is adjusted, the entire nozzle holder can be rotated and, in this way, the heeling angle of the washing nozzle can be adjusted, which is the same as the direction of the washing-fluid jet. The weakness and deficiency of this device is primarily in the fact that the nozzle holder is of larger dimensions and that it has two sealing spots between the inlet line of the washing fluid and the washing nozzle, the machining of which is complex. The nozzle closes the hole in which it is placed. If the nozzle is moved in one or another direction, a hole is produced at the nozzle as the lock moves together with the adjustable part. Because of this, there is no sealing effect at this spot anymore and water can leak; the visual effect is also not good.

Common weaknesses and deficiencies of the previously described solutions of devices for washing certain glass surfaces on vehicles are primarily in the fact that they do not make it possible to insert two, three or more cylindrical inserts with fluidic washing nozzles into an individual nozzle holder or nozzle body and to ensure a permanent and steady inflow of the washing fluid into inlet chambers located in front of the cylindrical inserts. Furthermore, the fluidic structure, i.e. flow channels are not constructed into both half cylinders of cylindrical fluidic inserts, which does not ensure optimal fluidic flow of the washing fluid. Furthermore, their weakness and deficiency is in the fact that it is rather complicated to produce and to assemble them, whereby special attention has to be paid to the correct position of cylindrical inserts when building them in, i.e. when inserting them into the corresponding cylindrical cavities.

The previously described weaknesses and deficiencies of individual known solutions and their common weaknesses and deficiencies represent an unsolved technical problem in the field of devices for cleaning glass surfaces on vehicles.

The described technical problem will be resolved with an adjustable fluidic nozzle of a washing system on vehicles, the fluidic nozzle of which the nozzle body will be carried out for the installation of one, two, three or more cylindrical fluidic inserts.

The invention is defined by independent claim 1 and is based on the development of an adjustable fluidic nozzle of the washing system on vehicles that will contain one, two, three or more cylindrical fluidic inserts with optimal fluidic effect and that will cover as large a washable surface on vehicles as possible with washing-fluid jets.

The invention resolves the problem with an innovative execution of the fluidic nozzle body and with the fluidic structure constructed in both half cylinders of the cylindrical fluidic inserts; primarily the construction of the inlet and outlet openings of the washing fluid is typical of the fluidic structure.

An integrated casing is formed of a jet leg for connecting a tube with a washing fluid and a body with as many cylindrical cavities as is the number of cylindrical fluidic inserts that will be inserted into it. The washing fluid flows into an integrated casing of the fluidic nozzle via supply channel that runs further into the mushroom-shaped body. After exiting the supply channel, the washing fluid is distributed into inlet channels that lead into individual cylindrical fluidic inserts, whereby fluid is equally distributed into inlet openings of the cylindrical inserts. Thereby it applies that the number of inlet channels is the same as the number of cylindrical cavities in the body and the number of cylindrical inserts inserted into them. Via suitable fluidic structure within the cylindrical inserts, which is formed on the basis of internal flow channels of appropriate construction, an oscillating washing-fluid jet is formed, which is, via outlet opening, directed to the surface of the vehicle that it washes. To achieve the optimal fluidic effect, the execution and location of the inlet and outlet openings on the cylindrical insert are very important. Thereby the fluidic structure and flow channels in it can be of optional execution, under the condition that the required fluidic effect is ensured.

The cylindrical fluidic insert according to the invention consists of two half cylinders, each of them having on the internal plane the flow channels, which are of identical construction and, regarding the structure of the cylindrical insert, they are congruent with each other. Centering pins and centering holes on half cylinders are intended to ensure correct positioning and precise assembly.

Due to a symmetrical construction of half cylinders it does not matter, from which side of the fluidic nozzle body the cylindrical fluidic inserts are inserted; they must be inserted in such a way that the ends with the slot required for positioning are outside. Also, the function of the cylindrical fluid inserts will be the same, regardless of which half cylinder will be below and which half cylinder will be above.

It is easy to set the angle of inclination of the cylindrical insert and thereby of the washing-fluid jet toward the washable surface. For this purpose, there is a slot on the front side of the cylindrical insert, in which a screwdriver or the like is inserted to rotate the insert to one or another direction, whereby the washing-fluid jet is set along the vertical line in the area of indentation around the inlet opening.

As mentioned at the beginning, the possibilities of using the adjustable fluidic nozzle on vehicles are numerous, for all types of land, water and air vehicles, and for various washable glass surfaces on them.

As the invention enables various executions and in order to present the basic principle of the execution and operation, the adjustable fluidic nozzle of the washing system on the vehicles will be described below, on the basis of three preferential feasibility examples of the nozzle body, depending on the number of inserted cylindrical fluidic inserts, which will be presented on the basis of figures that show as follows:
- Fig. 1: adjustable fluidic nozzle of the washing system on vehicles according to the invention with one cylindrical fluidic insert, in front view
- Fig. 2: same as in Fig. 1, only in vertical axial A-A cross-section
- Fig. 3: same as in Fig. 2, only in side view
- Fig. 4: same as in Fig. 1, only in cross-section B-B
- Fig. 5: same as in Fig. 1, only the empty casing, without the inserted insert, in axonometric projection
- Fig. 6: adjustable fluidic nozzle of the washing system on vehicles according to the invention with two cylindrical fluidic inserts, in front view
- Fig. 7: same as in Fig. 6, only in side view

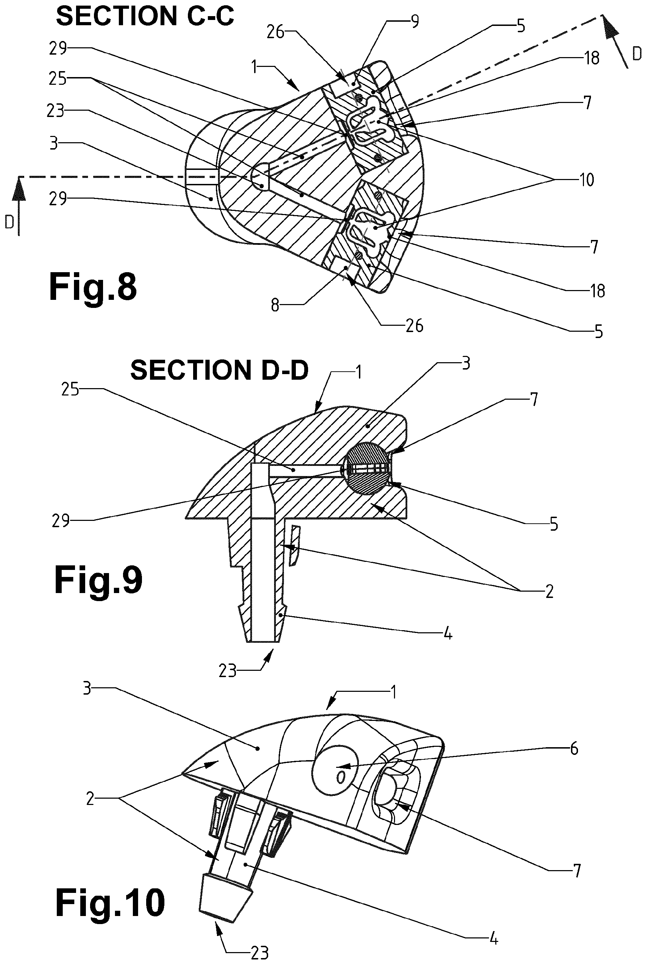

- Fig. 8: same as in Fig. 6, only in C-C horizontal section
- Fig. 9: same as in Fig. 6, only in D-D vertical section
- Fig.10: same as in Fig. 6, only the empty casing, without inserted inserts, in axonometric projection
- Fig.11: adjustable fluidic nozzle of the washing system on vehicles according to the invention, with three cylindrical fluidic inserts, in front view
- Fig. 12: same as in Fig. 11, only in E-E vertical section
- Fig. 13: same as in Fig. 11, only the empty casing, without inserted inserts, in axonometric projection

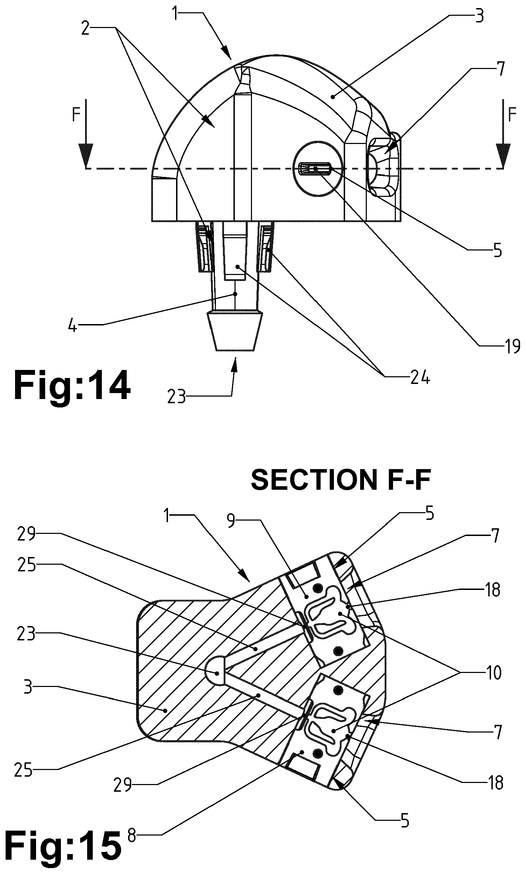

- Fig. 14: same as in Fig. 11, only in side view
- Fig. 15: same as in Fig. 11, only in F-F horizontal section
- Fig. 16: cylindrical fluidic insert, in plain view
- Fig. 17: same as in Fig. 16, only in side view
- Fig. 18: same as in Fig. 16, only in vertical axial G-G cross-section

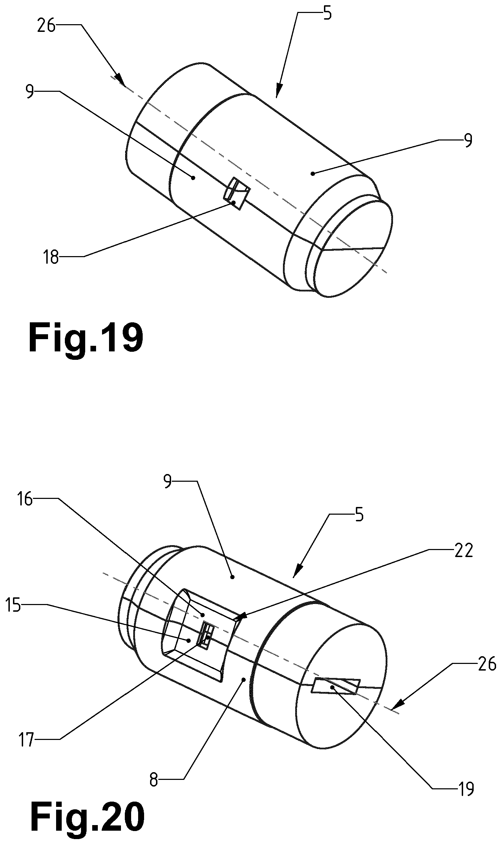

- Fig. 19: same as in Fig. 16, only in isometric projection and in side view on the side of the outlet opening
- Fig. 20: same as in Fig. 19, only on the side of the inlet opening

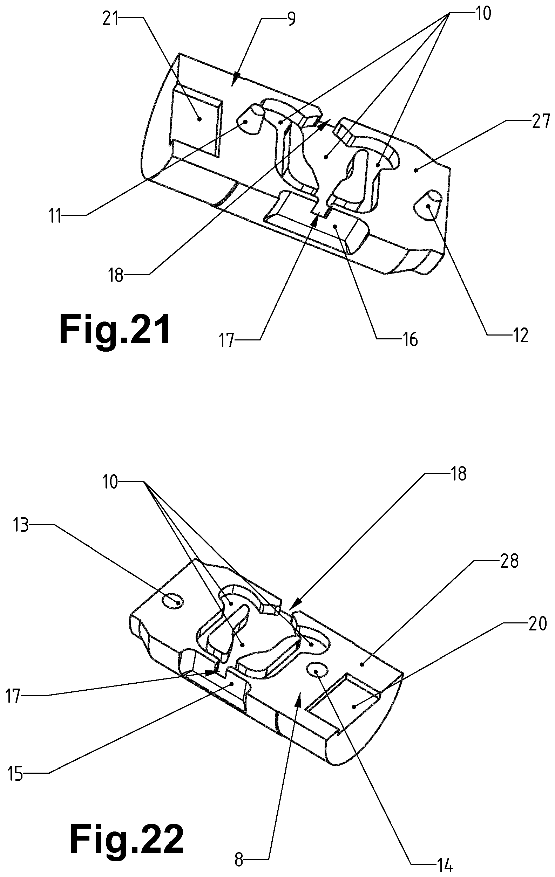

- Fig. 21: half cylinder with centering pins, in axonometric projection
- Fig. 22: same as in Fig. 21, only the second half cylinder with centering holes

The reference numerals in the figures indicate as follows:
1- fluidic nozzle
2- casing
3- nozzle body
4- jet leg
5- cylindrical fluidic insert
6- cylindrical cavity
7- cavity
8- half cylinder
9- half cylinder
10- internal flow channels
11- centering pin
12- centering pin
13- centering hole
14- centering hole
15- indentation
16- indentation
17- inlet opening
18- outlet opening
19- slot
20- indentation
21- indentation
22- small opening
23- supply channel
24- fixation clip
25- inlet channel
26- longitudinal axis
27- intersection surface
28- intersection surface
29- chamber

It applies for all feasibility examples of the adjustable fluidic nozzle of the washing system on vehicles according to this invention described below that a fluidic nozzle 1 basically consists of a casing 2, with a nozzle body 3 and jet leg 4 integrated therein. The executions of the nozzle bodies 3 can be different depending on each observed feasibility example separately and are dependent on the number of cylindrical fluidic inserts 5 inserted into them. More precisely, this will be described below, on the basis of the presented feasibility examples.

Regardless of the construction of the nozzle body 3 of the casing 2, it applies that in all feasibility examples of the fluidic nozzle 1, the cylindrical fluidic inserts 5 of identical construction are used, whereby they differ only in the dimensions, which must be such as to enable typification, unification and standardization of the casings 2 of fluidic nozzles 1 and of cylindrical fluidic inserts 5, including the construction of jet legs 4.

A pipe for supplying the washing fluid, which is not shown, is put on the jet leg 4. The washing fluid is supplied via supply channel 23 in the jet leg 4 to all inlet channels 25 and intermediate chambers 29 and via inlet openings 17 to and through the cylindrical fluidic inserts 5 wherefrom the washing fluid exits through the outlet openings 18.

Also, it applies for all the described feasibility examples that individual cylindrical fluidic inserts 5 can be inserted in any cylindrical cavity 6 in the nozzle body 3, which is enabled with the symmetry of the cylindrical fluidic insert 5 and the position of the outlet opening 18, which is constructed in the area and at the half of a centre longitudinal axis 26 and in the area of a transverse or vertical centre axis of the cylindrical fluidic insert 5. Thereby the inlet opening 17 and the outlet opening 18 are located on the same transverse axis of the cylindrical fluidic insert 5, i.e. they are constructed at the half of its length. In compliance with this, cavities 7 in the body 3 of the fluidic nozzle 1 are constructed, i.e. they are adapted accordingly. Also, it applies for all feasibility examples that the cylindrical fluidic inserts 5 within the cylindrical cavities 6 are not movable in the direction of their longitudinal axis 26.

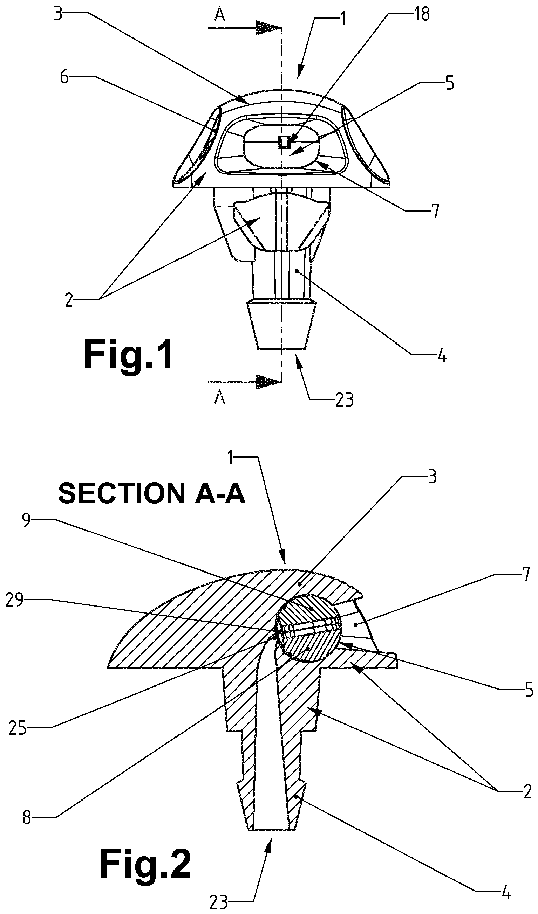

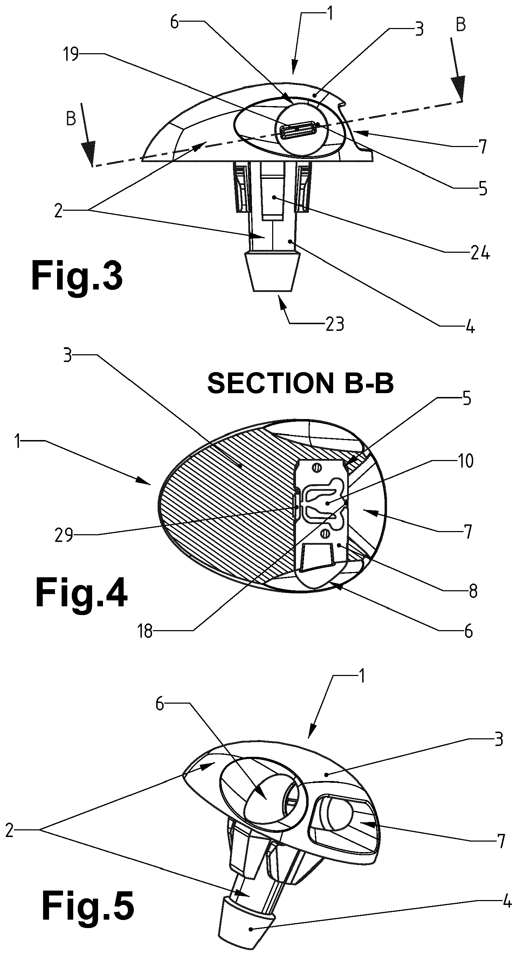

Figures 1 to 5 show the first feasibility example of the adjustable fluidic nozzle of the washing system on vehicles according to the invention, which has one cylindrical fluidic insert 5. In this feasibility example, in the body 3 of the fluidic nozzle 1, there is constructed the side cylindrical cavity 6, of which the horizontal longitudinal axis lies perpendicular to the vertical longitudinal axis of the jet leg 4 with the supply channel 23 and is slightly spaced from it. The cylindrical fluidic insert 5 is inserted with one end into the cylindrical cavity 6 so that it is rotatably movable and so that its inlet opening 17 lies at the side of the supply channel 23 with the inlet channel 25 and intermediate chamber 29, whereas its outlet opening 18 is located within the area of the cavity 7 on the front side of the nozzle body 3.

At one end, into the smaller front surface of the cylindrical fluidic insert 5, a slot 19 is constructed for vertical regulation of the outlet opening 18 and thereby for the angle adjustment, i.e. the height of the washing-fluid jet against the surface to be washed. For this purpose, it is sufficient to use a simple implement, which can be inserted into the slot 19. This feature is common to all feasibility examples. The end of the cylindrical fluidic insert 5 with the slot 19 protrudes from the cylindrical cavity 6.

On the external wall of the jet leg 4, fixation clips 24 are constructed for fixing the fluidic nozzle 1 into the corresponding cavity in the wall of the vehicle bodyshell. They can be of optional execution. This applies for all feasibility examples.

Hereinafter, the executions of the fluidic nozzle 1 with the two and three cylindrical fluidic inserts 5 will be described and also shown in the figures, whereby only thereof features, which belong exclusively to them, will be pointed out, and also thereof execution differences in relation to the previously described fluidic nozzle 1 with one cylindrical fluidic insert 5, will be presented. The constructional features being identical to the first feasibility example of the fluidic nozzle 1 with one cylindrical fluidic insert 5 will thus not be described and explained again.

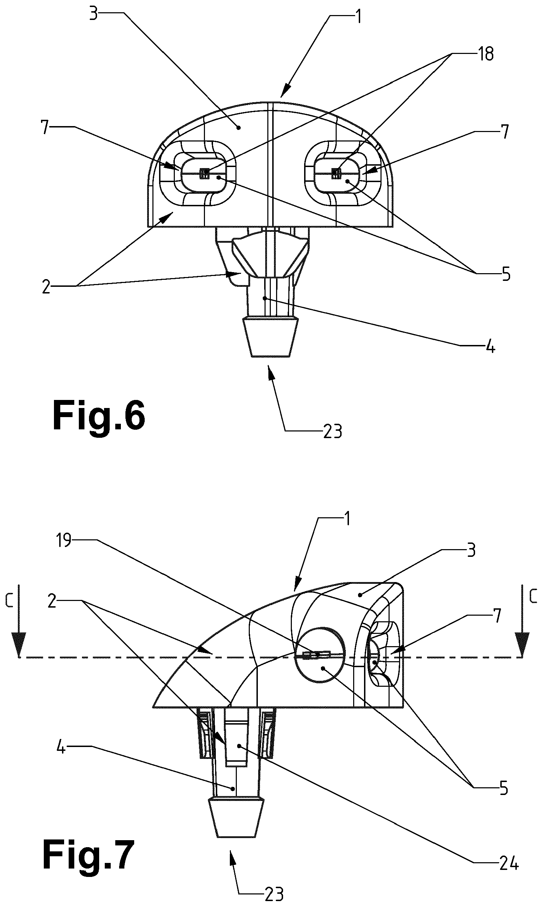

The execution of the fluidic nozzle 1 with two cylindrical fluidic inserts 5 according to the second feasibility example is shown in figures 6 to incl. 10. In this example, in the nozzle body 3, two cylindrical cavities 6 are constructed, lying in the same plane so that their longitudinal axes form an optional acute angle. One cylindrical fluidic insert 5 is inserted into each cylindrical cavity 6 so that the longitudinal axes 26 of both cylindrical fluidic inserts 5 form an acute angle, which is identical and equal to the acute angle between two longitudinal axes of the cylindrical fluidic cavities 6, which intersect in the middle of the nozzle body 3.

The cylindrical fluidic inserts 5 are inserted into the cylindrical fluidic cavities 6 in such a way that their inlet opening 17 lies opposite or next to the corresponding inlet channel 25, with which it forms a chamber 29. The outlet openings 18 of the cylindrical fluidic inserts 5 are each positioned within the area of the corresponding cavity 7 in the nozzle body 3, they are constructed in the same horizontal plane and slightly spaced apart from each other.
The inlet channels 25 of both cylindrical fluidic inserts 5 are flow connected with a common supply channel 23 for the supply of the washing fluid, which flows from the inlet channels 25 and through the intermediate chamber 29 to and through the cylindrical fluidic inserts 5.

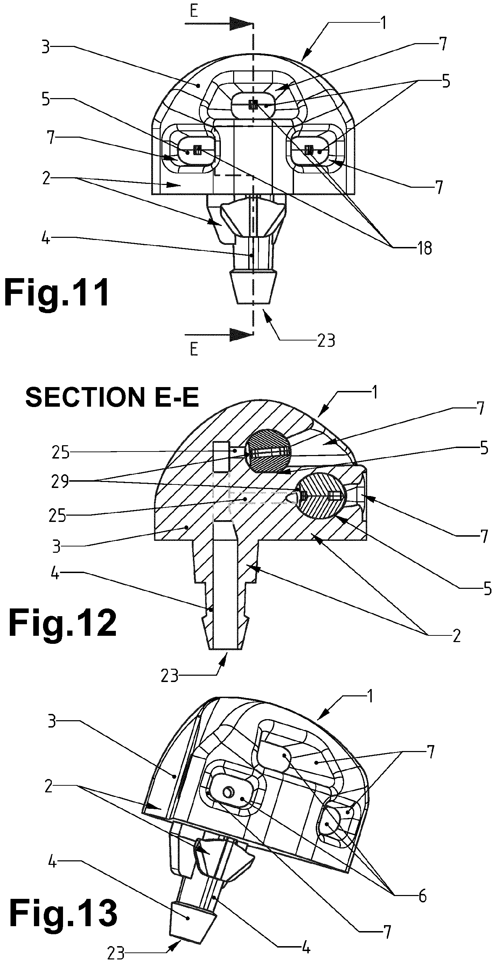

The third feasibility example of the fluidic nozzle 1 with three cylindrical fluidic inserts 5 is shown in figures 11 to incl. 15. In this feasibility examples, three cylindrical cavities 6 are made into the nozzle body 3. As in the previous feasibility example, the lower cylindrical cavities 6 are located in the same horizontal plane, whereby their longitudinal axes form an optional acute angle in view of the vertical plane and they join in the middle of the fluidic nozzle 1.
Above the lower cylindrical cavities 6 and in the area of the vertical axis of the nozzle body 3, the third cylindrical cavity 6 is located.
The corresponding inlet channel 25 runs into each of the three cylindrical fluidic cavities 6. The inlets channels 25 flow connect all three cylindrical fluidic cavities 6 with the common supply channel 23.

One cylindrical fluidic insert 5 is inserted into each of the cylindrical cavities 6 so that the longitudinal axes 26 of the cylindrical fluidic inserts 5 in the lower two cylindrical cavities 6 form an acute angle, which is identical or equal to the acute angle between the longitudinal axes of the cylindrical cavities 6, whereas the longitudinal axis 26 of the cylindrical fluidic insert 5 that lies above them is perpendicular to the vertical axis of the supply channel 23.

The cylindrical fluidic inserts 5 are inserted into the corresponding cylindrical cavities 6 in the nozzle body 3 with one end in such a way that their inlet opening 17 lies at the corresponding inlet channel 25, with which it forms a chamber 29. The outlet openings 18 of all three cylindrical fluidic inserts 5 are positioned in such a way that each outlet opening 18 lies within the area of the corresponding cavity 7. The lower two cavities 7 are executed in the same horizontal plane and are slightly spaced apart from each other. The third cavity 7 lies above them in the area of the intermediate vertical axis, which is perpendicular to the horizontal axis of the lower cavities 7. All the cavities 7 are constructed on, i.e. on the front wall of the nozzle body 3.

By inserting the cylindrical fluidic inserts 5 into the cylindrical cavities 6, intermediate chambers 29 are formed between the cylindrical fluidic inserts 5 and the inlet channels 25.

As previously described, all the inlet channels 25 of all the three cylindrical fluidic inserts 5 are flow connected with the common supply channel 23 for inflow and flow of the washing fluid into and through the cylindrical fluidic inserts 5, which are inserted into the cylindrical fluidic cavities 6. As the inlet channels 25 are of the same cross-section and diameter, the washing fluid is equally distributed into all inlet channels 25 and, consequently, into all cylindrical fluidic inserts 5.

It applies that all the cylindrical cavities 6 are of such a diameter that cylindrical fluidic inserts 5 can be inserted into them so as to ensure watertight fit. This makes it possible to use only one type of cylindrical fluidic inserts 5 for all cylindrical cavities 6 in the nozzle body 3 and, consequently, typification, unification and standardisation of producing and assembling fluidic nozzles 1, regardless of the feasibility example, are possible.
The position of the outlet opening 18 on the cylindrical fluidic inserts 5, within the cavities 7 in the body 3 of the fluidic nozzle 1, is adjusted arbitrarily in the vertical direction by means of the slots 19 on the cylindrical fluidic inserts 5. Due to the possibility of rotational movement of each cylindrical fluidic insert 5 separately, they can be set in various positions, i.e. heights in view of the vertical line and in view of the washable surface.

In some other feasibility example not shown in figures, the fluidic nozzle 1, in the nozzle body 3, can also have four, five or more cylindrical cavities 6, in an optional sequence, with the same number of cylindrical fluidic inserts 5 inserted into them and the same number of inlet channels 25. The number of cylindrical cavities 6 with cylindrical fluidic inserts 5 is practically limited only with the dimension of the body 3 of the fluidic nozzle 1, of the supply channel 23 and the inlet channels 25, on which the sufficient quantity of the washing fluid depends. The number is also limited with the size of the washable surface on vehicle. Naturally, it applies for all shown and not shown feasibility examples that the cylindrical cavities 6 in the body 3 of each fluidic insert 1 have to be located and constructed in such a way that they enable smooth insertion and separate vertical regulation of individual cylindrical fluidic inserts 5 within the cylindrical cavities 6.

Also, it applies for all previously described feasibility examples that, into each cylindrical cavity 6, the cylindrical fluidic insert 5 is inserted with one end so that it is rotatably movable and that its inlet opening 17 lies at the side of the supply channel 23 with the inlet channel 25 and the chamber 29, whereas its outlet opening 18 is located within the area of the cavity 7 at the front side of the nozzle body 3.

For all the previously shown and described feasibility examples of the fluidic nozzles 1, it also applies that the cylindrical cavities 6 in the nozzle body 3 are of the same shapes and dimensions, which applies equally to the shape and dimension of the cylindrical fluidic inserts 5, and that all their aforesaid dimensions and shapes ensure watertight fit. Also, the inlet channels 25 are of the same cross-sections and dimensions. From the aspect of the construction, it is recommended that also the cavities 7 in the nozzle body 3 are unified. Any deviations from these technical parameters can have a negative impact upon the execution, operation and appearance of the nozzles 1.

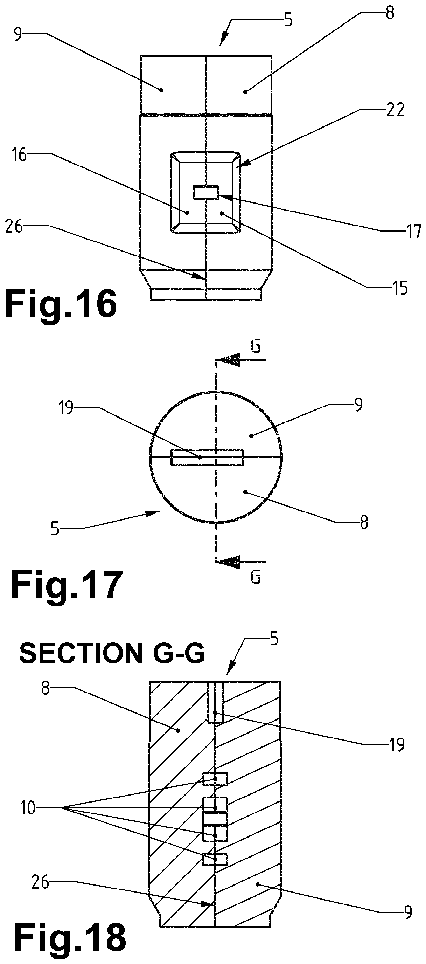

The execution of the cylindrical fluidic insert 5 according to the invention is shown in figures 16 to incl. 22.

The cylindrical fluidic insert 5 is formed by two half cylinders 8 and 9 lying one upon the other via their intersection surfaces 27 and 28 so that the intermediate longitudinal axis 26 divides the cylindrical fluidic insert 5 into two symmetrical, almost identical halves, which differ from each other only in the fact that one of them has centering pins 12 and the other one centering holes 13. The half cylinders 8 and 9 joined in this way form the intermediate fluidic structure by way of the construction of internal flow channels 10, made into the intersection surface 27 on the half cylinder 9 and into the intersection surface 28 on the half cylinder 8 and they are congruent with each other. Also, when the cylindrical fluidic inserts 5 are assembled, the indentations 15 and 16 with the inlet opening 17 and the indentations 20 and 21 and both halves of the outlet opening 18, constructed on or in the half cylinder 8 and/or 9, also match.

Basically, the half cylinders 8 and 9 are executed as two separate parts, forming together a symmetrical cylindrical fluidic insert 5, and connected with each other with two centering pins 11 and 12 on the intersection surface 27 of the half cylinder 9, inserted into the centering holes 13 and 14 on the intersection surface 28 of the half cylinder 8. Thereby the centering pin 11 is inserted into the centering hole 13, whereas the centering pin 12 is inserted into the centering hole 14.

The centering pin 11 is carried out between the internal flow channels 10 and the indentation 21, whereas the centering pin 12 is carried out at the shorter edge of the front surface of the half cylinder 9. In the same way, the centering holes 13 and 14 being congruent to centering pins 11 and 12 are carried out and located in the intersection surface 28 of the half cylinder 8.

In some other feasibility example, the centering pins 11 and 12 are carried out also on the intersection surface 28 of the half cylinder 8, whereas the centering holes 13 and 14 are carried out in the intersection surface 27 of the half cylinder 9 and they can also be positioned differently on or in the intersection surfaces 27 and 28. In the presented example, the centering pins 11 and 12 are of the shape of a truncated cone, which applies also for the centering holes 13 and 14. In some other feasibility example, both can be of different regular or irregular shapes.

The indentation 20 on the half cylinder 8 and the indentation 21 on the half cylinder 9 together form the slot 19 for vertical adjustment of the outlet opening 18 on the cylindrical fluidic insert 5 within the area of its corresponding cylindrical cavity 6 in the body 3 of the fluidic nozzle 1.

The matching halves of the inlet opening 17 are constructed in a longer side edge of the half cylinders 8 and 9, in the area of their transverse centre axis, whereas the matching halves of the outlet opening 18 are constructed in the opposite longer edge, also in the area of their transverse axis, for inlet and outlet of the washing fluid from the cylindrical fluidic insert 5. The inlet opening 17 of the cylindrical fluidic insert 5 is encircled with the indentations 15 and 16, surrounded with a small opening 22. Between the inlet opening 17 and the outlet opening 18, the internal flow channels 10 of the cylindrical fluidic insert 5 of optional design are located, ensuring effective spraying of the washing fluid in the right direction.

The operation of the fluidic nozzle 1 according to the invention is simple and effective, regardless of the type of the described feasibility example. To provide simple understanding of the essence of the invention, the operation of the fluidic nozzle 1 with three cylindrical fluidic nozzles 5 will be described, which by analogy applies also for all other executions with one, two or more cylindrical fluidic inserts 5.

The washing fluid enters the fluidic nozzle 1 through the common supply channel 23 in the jet leg 4, onto which is positioned a not shown supply pipe for supplying the washing fluid to the fluidic nozzle 1.The washing fluid then travels through the supply channel 23 into the interior of the integrated casing 2 and the nozzle body 3, wherein it is distributed equally into all three inlet channels 25. Then the washing fluid runs through the inlet channels 25 and through the corresponding intermediate chambers 29, via indentations 15 and 16 and through the inlet openings 17 into the individual inserted cylindrical fluidic inserts 5 and further through their internal flow channels 10, from which the generated oscillating washing-fluid jet exits the cylindrical fluidic inserts 5 through the outlet openings 18 in the direction of the washable surface on vehicle. The direction and the angle of the jet from an individual cylindrical fluidic insert 5 is previously set by means of the slot 19.

Washable surfaces include glass surfaces on vehicles, e.g. windshield glass, rear windows, side windows, glass roofs, camera lens, etc.

## Claims

1. An adjustable fluidic nozzle of a washing system on vehicles, with a casing (2) being formed with a nozzle body (3) with a horizontal cylindrical cavity (6) and there into rotatably movable inserted cylindrical insert (5), and a jet leg (4) with a supply channel (23), whereby in a nozzle body (3), there are carried out one, preferentially two, three or more cylindrical cavities (6), which are all via inlet channels (25) flow connected with the supply channel (23) in the jet leg (4), whereby into individual cylindrical cavities (6) at least one cylindrical fluidic insert (5) is inserted so that together with the corresponding inlet channels (25) it forms an intermediate chamber (29); **characterised by** the fact that the cylindrical fluidic insert (5) is carried out from two, mutually separated, symmetrical half cylinders (8) and (9), whereby internal flow channels (10) with an inlet opening (17) and an outlet opening (18) are carried out congruently into both intersection surfaces (28) and (27), which applies also for a congruity of an indentation (20) in one intersection surface (28) and indentation (21) in the other intersection surface (27) and for congruity of the position of centering pins (11) and (12) on the one intersection surface (27) in view of the position of centering holes (13) and (14) in the other intersection surface (28).

2. The fluidic nozzle according to Claim 1 **is characterised by the fact** that each cylindrical cavity (6) is flow connected with the common supply channel (23) via at least one inlet channel (25), whereby all inlet channels (25) are of the same diameter and cross-section.

3. The fluidic nozzle according to Claim 1 **is characterised by the fact** that by an execution of a fluidic nozzle (1) with two cylindrical fluidic inserts (5) in the nozzle body (3), two cylindrical cavities (6) are carried out next to one another in such a way that they lie in the same horizontal plane, whereas their longitudinal axes form an optional acute angle, which is identical to an acute angle between longitudinal axes (26) of the cylindrical fluidic inserts (5) inserted into them, the longitudinal axes (26), which intersect in the middle of the nozzle body (3).

4. The fluidic nozzle according to Claim 1 **is characterised by the fact** that by an execution of the fluidic nozzle (1) with three cylindrical fluidic inserts (5), two lower cylindrical cavities (6) are slightly spaced from each other and carried out in the same horizontal plane so that their longitudinal axes form an optional acute angle in view of the vertical plane and -intersect in the middle of the nozzle body (3), whereas slightly above the lower cylindrical cavities (6) the third cylindrical cavity (6) is located in the area of the vertical axis of the nozzle body (3), which is perpendicular to the axis of the lower cavities (7).

5. The fluidic nozzle according to Claim 1 **is characterised by the fact** that the cylindrical cavities (6) inside the nozzle body (3) are located and carried out in such a way to enable smooth insertion and regulation of each individual cylindrical fluidic insert (5) separately and are of such dimensions and cross-sections that ensure watertight fit of the cylindrical fluidic inserts (5) inserted into them.

6. The fluidic nozzle according to Claim 5 **is characterised by the fact** that the cylindrical fluidic inserts (5) are inserted into the cylindrical cavities (6) regardless of the position of one haif cylinder (8) and the other half cylinder (9), which is enabled by the symmetry of the cylindrical fluidic insert (5) and the location of an outlet opening (18) in the area of one half of a central longitudinal axis (26) and in the area of a vertical central axis of the cylindrical fluidic insert (5).

7. The fluidic nozzle according to Claim 4 **is characterised by the fact** that the cylindrical fluidic inserts (5) are inserted into the cylindrical cavities (6) in such a way that longitudinal axes (26) of the cylindrical fluidic inserts (5) in the lower pair of the cylindrical cavities (6) form an acute angle, which is identical to the acute angle between longitudinal axes of both cylindrical cavities (6), whereas the longitudinal axis (26) of the cylindrical fluidic insert (5), being above cylindrical cavities (6), is perpendicular to the vertical axis of the supply channel (23).

8. The fluidic nozzle according to Claim 1 **is characterised by the fact** that in a given nozzle body (3), there are inserted as many cylindrical fluidic inserts (5) as there are carried out cylindrical cavities (6) with appurtenant channels (25).

9. The fluidic nozzle according to Claim 5 **is characterised by the fact** that the cylindrical fluidic inserts (5), which are rotatably movable in the cylindrical cavities (6), are not movable in the direction of their longitudinal axes (26).

10. The fluidic nozzle according to Claim 1 **is characterised by the fact** that the half cylinders (8) and (9) are carried out as two separate parts that are joined into the symmetrical cylindrical fluidic insert (5) so that the centering pin (11) of one half cylinder (9) is located in the centering hole (13) of the other half cylinder (8), whereas the centering pin (12) of the one half cylinder (9) is located in the centering hole (14) of the other half cylinder (8).

11. The fluidic nozzle according to Claim 1 **is characterised by the fact** that at the inlet opening (17) of the cylindrical fluidic insert (5) indentations (15, 16), surrounded by a small opening (22), are constructed.

12. The fluidic nozzle according to Claim 1 **is characterised by the fact** that the indentation (20) forming the flow channels is constructed along the shorter edge of the intersection surface (28) of one half cylinder (8), whereas the indentation (21) forming the flow channels is constructed along the shorter edge of the intersection surface (27) of the other half cylinder (9).

13. The fluidic nozzle according to Claims 3 and 4 **is characterised by the fact** that in the body (3) of the same fluidic nozzle (1), there are possible executions that are a combination of executions of two and/or three cylindrical fluidic inserts (5) within the corresponding cylindrical cavities (6) in one or more optional successive sets.

## Patentansprüche

1. Verstellbare fluidische Düse eines Waschsystems an Fahrzeugen, bei dem ein Gehäuse (2) mit einem Düsenkörper (3) mit einem horizontalen zylindrischen Hohlraum (6) und einem darin drehbar beweglichen eingesetzten zylindrischen Einsatz (5) und einem Düsenschenkel (4) mit einem Versorgungskanal (23) ausgebildet ist,
wobei in einem Düsenkörper (3) ein, bevorzugt zwei, drei oder mehr zylindrische Hohlräume (6) ausgeführt sind, die alle über Zulaufkanäle (25) mit dem Zuführkanal (23) in dem Düsenschenkel (4) strömungsverbunden sind, wobei in einzelne zylindrische Hohlräume (6) wenigstens ein zylindrischer fluidischer Einsatz (5) derart eingesetzt ist, dass er zusammen mit den entsprechenden Einlasskanälen (25) eine Zwischenkammer (29) bildet;
**dadurch gekennzeichnet, dass**
der zylindrische fluidische Einsatz (5) aus zwei voneinander getrennten, symmetrischen Halbzylindern (8) und (9) ausgeführt ist, wobei innere Strömungskanäle (10) mit einer Einlassöffnung (17) und einer Auslassöffnung (18) kongruent in beide Schnittflächen (28) und (27) ausgeführt sind, was auch für eine Kongruenz einer Einbuchtung (20) in einer Schnittfläche (28) und Einbuchtung (21) in der anderen Schnittfläche (27) und für eine Kongruenz der Lage der Zentrierstifte (11) und (12) auf der einen Schnittfläche (27) im Hinblick auf die Position der Zentrierlöcher (13) und (14) in der anderen Schnittfläche (28) gilt.

2. Fluidische Düse nach Anspruch 1, **dadurch gekennzeichnet, dass** jeder zylindrische Hohlraum (6) über wenigstens einen Einlasskanal (25) mit dem gemeinsamen Zulaufkanal (23) strömungsverbunden ist, wobei sämtliche Einlasskanäle (25) denselben Durchmesser und Querschnitt haben.

3. Fluidische Düse nach Anspruch 1, **dadurch gekennzeichnet, dass** durch eine Ausführung einer fluidischen Düse (1) mit zwei zylindrischen fluidischen Einsätzen (5) in dem Düsenkörper (3) zwei zylindrische Hohlräume (6) so nebeneinander liegend ausgeführt sind, dass sie in derselben horizontalen Ebene liegen, wohingegen ihre Längsachsen einen optionalen spitzen Winkel bilden, der mit einem spitzen Winkel zwischen Längsachsen (26) der eingesetzten zylindrischen fluidischen Einsätze (5), den Längsachsen (26), die sich in der Mitte des Düsenkörpers (3) kreuzen, identisch ist.

4. Fluidische Düse nach Anspruch 1, **dadurch gekennzeichnet, dass** durch eine Ausführung der fluidischen Düse (1) mit drei zylindrischen Fluideinsätzen (5) zwei untere zylindrische Hohlräume (6) geringfügig voneinander beabstandet und in derselben horizontalen Ebene ausgeführt sind, so dass ihre Längsachsen einen optionalen spitzen Winkel im Hinblick auf die vertikale Ebene bilden und sich in der Mitte des Düsenkörpers (3) schneiden, wohingegen etwas oberhalb der unteren zylindrischen Hohlräume (6) der dritte zylindrische Hohlraum (6) in dem Bereich der vertikalen Achse des Düsenkörpers (3) liegt, die senkrecht zu der Achse der unteren Hohlräume (7) ist.

5. Fluidische Düse nach Anspruch 1, **dadurch gekennzeichnet, dass** die zylindrischen Hohlräume (6) innerhalb des Düsenkörpers (3) so angeordnet und ausgeführt sind, dass ein reibungsloses Einsetzen und Regulieren jedes einzelnen zylindrischen fluidischen Einsatzes (5) getrennt möglich ist, und derartige Abmessungen und Querschnitte aufweisen, die einen wasserdichten Sitz der darin eingesetzten zylindrischen fluidischen Einsätze (5) gewährleisten.

6. Fluidische Düse nach Anspruch 5, **dadurch gekennzeichnet, dass** die zylindrischen fluidischen Einsätze (5) unabhängig von der Position des einen Halbzylinders (8) und des anderen Halbzylinders (9) in die zylindrischen Hohlräume (6) eingesetzt sind, die durch die Symmetrie des zylindrischen fluidischen Einsatzes (5) und die Lage einer Austrittsöffnung (18) im Bereich einer Hälfte einer Mittellängsachse (26) und im Bereich einer vertikalen Mittelachse des zylindrischen fluidischen Einsatzes (5) ermöglicht ist.

7. Fluidische Düse nach Anspruch 4, **dadurch gekennzeichnet, dass** die zylindrischen Fluideinsätze (5) derart in die zylindrischen Hohlräume (6) eingesetzt sind, dass Längsachsen (26) der zylindrischen fluidischen Einsätze (5) in dem unteren Paar der zylindrischen Hohlräume (6) einen spitzen Winkel bilden, der mit dem spitzen Winkel zwischen den Längsachsen der beiden zylindrischen Hohlräume (6) identisch ist, wohingegen die Längsachse (26) des zylindrischen fluidischen Einsatzes (5), die sich oberhalb zylindrischer Hohlräume (6) befindet, senkrecht zu der vertikalen Achse des Versorgungskanals (23) ist.

8. Fluidische Düse nach Anspruch 1, **dadurch gekennzeichnet, dass** in einem gegebenen Düsenkörper (3) so viele zylindrische fluidische Einsätze (5) eingesetzt sind, wie zylindrische Hohlräume (6) mit zugehörigen Kanälen (25) ausgeführt sind.

9. Fluidische Düse nach Anspruch 5, **dadurch gekennzeichnet, dass** die in den zylindrischen Hohlräumen (6) drehbar beweglichen zylindrischen Fluideinsätze (5) nicht in Richtung ihrer Längsachsen (26) bewegbar sind.

10. Fluidische Düse nach Anspruch 1, **dadurch gekennzeichnet, dass** die Halbzylinder (8) und (9) als zwei separate Teile ausgeführt sind, die in dem symmetrischen zylindrischen Fluideinsatz (5) so zusammengefügt sind, dass sich der Zentrierstift (11) eines Halbzylinders (9) in der Zentrierbohrung (13) des anderen Halbzylinders (8) befindet, wohingegen sich der Zentrierstift (12) des einen Halbzylinders (9) in der Zentrierbohrung (14) des anderen Halbzylinders (8) befindet.

11. Fluidische Düse nach Anspruch 1, **dadurch gekennzeichnet, dass** an der Einlassöffnung (17) des zylindrischen Fluideinsatzes (5) von einer kleinen Öffnung (22) umgebene Vertiefungen (15, 16) ausgebildet sind.

12. Fluidische Düse nach Anspruch 1, **dadurch gekennzeichnet, dass** die die Strömungskanäle bildende Vertiefung (20) entlang der kürzeren Kante der Schnittfläche (28) eines Halbzylinders (8) ausgebildet ist, wohingegen die Vertiefung (21), die die Strömungskanäle ausbildet, entlang der kürzeren Kante der Schnittfläche (27) des anderen Halbzylinders (9) ausgebildet ist.

13. Fluidische Düse nach den Ansprüchen 3 und 4, **dadurch gekennzeichnet, dass** in dem Körper (3) derselben fluidischen Düse (1) Ausführungen möglich sind, die eine Kombination von Ausführungen von zwei und/oder drei zylindrischen fluidischen Einsätzen (5) innerhalb der entsprechenden zylindrischen Hohlräume (6) in einem oder mehreren wahlweise aufeinanderfolgenden Sätzen sind.

## Revendications

1. Buse fluidique ajustable d'un système de lavage de véhicules, comportant une enveloppe (2) formée d'un corps de buse (3) avec une cavité cylindrique horizontale (6) et un insert cylindrique (5) inséré mobile et pouvant tourner dans celle-ci, ainsi que d'une branche d'éjection (4) avec un canal d'alimentation (23), grâce à quoi
une, de préférence deux, trois ou plusieurs cavités cylindriques (6) sont réalisées dans le corps de buse (3), lesquelles sont toutes reliées par liaison fluidique au travers de canaux d'entrée (25) avec le canal d'alimentation (23) dans la branche d'éjection (4), grâce à quoi, dans des cavités cylindriques individuelles (6), au moins un insert fluidique cylindrique (5) est inséré de sorte à former, avec les canaux d'entrée (25) correspondants, un compartiment intermédiaire (29),
**caractérisée par le fait que** l'insert fluidique cylindrique (5) est réalisé à partir de deux demi-cylindres (8) et (9) symétriques séparés mutuellement, grâce à quoi des canaux de flux internes (10) comportant une ouverture d'entrée (17) et une ouverture de sortie (18) sont réalisés de manière congruente dans les deux surfaces (28) et (27) d'intersection, ce qui s'applique également pour une congruité d'indentation (20) dans une surface d'intersection (28) et pour une indentation (21) dans l'autre surface d'intersection (27) ainsi que pour une congruité de la position de broches (11) et (12) de centrage sur la première surface d'intersection au vu de la position de trous (13) et (14) de centrage dans l'autre surface d'intersection (28).

2. Buse fluidique selon la revendication 1, **caractérisée par le fait que** chaque cavité cylindrique (6) est reliée par liaison fluidique avec le canal commun d'alimentation (23) au travers d'au moins un canal d'entrée (25) grâce à quoi tous les canaux d'entrée (25) présentent le même diamètre et la même section transversale.

3. Buse fluidique selon la revendication 1, **caractérisée par le fait que,** grâce à la réalisation d'une buse fluidique (1) comportant deux inserts fluidiques cylindrique (5) dans le corps de buse (3), deux cavités cylindriques (6) sont réalisées pour être rapprochées l'une de l'autre de manière à ce qu'elles résident dans le même plan horizontal alors que leurs axes longitudinaux forment en option un angle aigu qui est identique à l'angle aigu existant entre les axes longitudinaux (26) des inserts fluidiques cylindriques (5) insérés dans celles-ci, les axes longitudinaux (26) se coupant au milieu du corps de buse (3) .

4. Buse fluidique selon la revendication 1, **caractérisée par le fait que,** grâce à la réalisation de la buse fluidique (1) comportant trois inserts fluidiques cylindriques (5), deux cavités cylindriques (6) inférieures sont légèrement espacées l'une de l'autre et réalisées dans le même plan horizontal de sorte à ce que leurs axes longitudinaux forment en option un angle aigu compte-tenu du plan vertical et se coupent au milieu du corps de buse (3), alors que la troisième cavité cylindrique (6), légèrement au-dessus des cavités cylindriques inférieures (6), est située dans la zone de l'axe vertical du corps de buse (3) qui est perpendiculaire à l'axe des cavités inférieures (7).

5. Buse fluidique selon la revendication 1, **caractérisée par le fait que** les cavités cylindriques (6) à l'intérieur du corps de buse (3) sont situées et réalisées de manière à autoriser séparément une insertion et un réglage en douceur de chaque insert fluidique cylindrique (5) individuel, et sont de dimensions et de section transversale telles qu'elles garantissent un ajustement étanche à l'eau des inserts fluidiques cylindriques (5) insérés en elles.

6. Buse fluidique selon la revendication 5, **caractérisée par le fait que** les inserts fluidiques cylindriques (5) sont insérés dans les cavités cylindriques (6) indépendamment de la position d'un premier demi-cylindre (8) et de l'autre demi-cylindre (9), ce qui est autorisé grâce à la symétrie de l'insert fluidique cylindrique (5) et l'emplacement d'une ouverture de sortie (18) dans la zone d'une première moitié de l'axe longitudinal central (26) et dans la zone de l'axe central vertical de l'insert fluidique cylindrique (5).

7. Buse fluidique selon la revendication 4, **caractérisée par le fait que** les inserts fluidiques cylindriques (5) sont insérés dans les cavités cylindriques (6) de manière à ce que les axes longitudinaux (26) des inserts fluidiques cylindriques (5) dans la paire inférieure des cavités cylindriques (6) forment un angle aigu qui est identique à l'angle aigu existant entre les axes longitudinaux des deux cavités cylindriques (6) alors que l'axe longitudinal (26) de l'insert fluidique cylindrique (5), se trouvant au-dessus des cavités cylindriques (6), est perpendiculaire à l'axe vertical du canal d'alimentation (23) .

8. Buse fluidique selon la revendication 1, **caractérisée par le fait qu'il** est inséré dans un corps de buse donné (3) autant d'inserts fluidiques cylindriques (5) qu'il existe de cavités cylindriques (6) comprenant des canaux accessoires (25).

9. Buse fluidique selon la revendication 5, **caractérisée par le fait que** les inserts fluidiques cylindriques (5) qui sont montés tournants dans les cavités cylindriques (6) ne sont pas mobiles dans la direction de leurs axes longitudinaux (26).

10. Buse fluidique selon la revendication 1, **caractérisée par le fait que** les demi-cylindres (8) et (9) sont réalisés sous forme de deux composants séparés qui sont réunis dans l'insert fluidique cylindrique (5) de sorte à ce que la broche de centrage (11) d'un premier demi-cylindre (9) soit située dans le trou de centrage (13) de l'autre demi-cylindre (8) alors que la broche de centrage (12) du premier demi-cylindre (9) est située dans le trou de centrage (14) de l'autre demi-cylindre (8).

11. Buse fluidique selon la revendication 1, **caractérisée par le fait qu'au** niveau de l'ouverture d'entrée (17) sont réalisées des indentations (15, 16) de l'insert fluidique cylindrique (5), entourées par une petite ouverture (22).

12. Buse fluidique selon la revendication 1, **caractérisée par le fait que** l'indentation (20) formant les canaux d'écoulement est réalisée le long de la bordure la plus courte de la surface d'intersection (28) du premier demi-cylindre (8), alors que l'indentation (21) formant les canaux d'écoulement est réalisée le long du bord le plus court de la surface d'intersection (27) de l'autre demi-cylindre (9).

13. Buse fluidique selon les revendications 3 et 4, **caractérisée par le fait qu'il** existe dans le corps (3) de la même buse fluidique (1) de possibles réalisations qui sont une combinaison des réalisations de deux et/ou trois inserts fluidiques cylindriques (5) à l'intérieur des cavités cylindriques (6) correspondantes dans un ou plusieurs ensembles successifs optionnels.
